(19) Europäisches Patentamt / European Patent Office / Office européen des brevets

(11) **EP 2 867 087 B1**

(12) **FASCICULE DE BREVET EUROPEEN**

(45) Date de publication et mention de la délivrance du brevet:
**01.01.2020 Bulletin 2020/01**

(21) Numéro de dépôt: **13744623.3**

(22) Date de dépôt: **25.06.2013**

(51) Int Cl.:
**B60W 20/14** *(2016.01)*    **B60W 10/06** *(2006.01)*
**B60W 10/08** *(2006.01)*    **B60W 10/26** *(2006.01)*
**B60W 20/15** *(2016.01)*    **B60W 20/00** *(2016.01)*

(86) Numéro de dépôt international:
**PCT/FR2013/051478**

(87) Numéro de publication internationale:
**WO 2014/001707 (03.01.2014 Gazette 2014/01)**

(54) **PROCEDE DE GESTION DE L'ENERGIE SUR UN VEHICULE HYBRIDE**

ENERGIEMANAGEMENTVERFAHREN IN EINEM HYBRIDFAHRZEUG

METHOD FOR ENERGY MANAGEMENT IN A HYBRID VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2012 FR 1256087**

(43) Date de publication de la demande:
**06.05.2015 Bulletin 2015/19**

(73) Titulaire: **Renault S.A.S.**
**92100 Boulogne-Billancourt (FR)**

(72) Inventeurs:
• **DEBERT, Maxime**
**78000 Versailles (FR)**
• **BREUILLE-MARTIN, Franck**
**45300 Intville-la-guetard (FR)**
• **LE-ROY, Loïc**
**92350 Le Plessis Robinson (FR)**

(56) Documents cités:
**EP-A1- 1 842 758      EP-A2- 0 829 389**
**WO-A1-2012/005655      FR-A1- 2 926 048**
**US-A1- 2011 066 308**

**Description**

La présente invention concerne la gestion de répartition des flux énergétiques dans un groupe motopropulseur hybride de véhicule automobile en réponse à la demande de couple du conducteur.

Plus précisément, elle a pour objet un procédé de gestion de l'énergie sur un groupe motopropulseur de véhicule hybride comprenant un moteur thermique et au moins un moteur électrique alimenté par une batterie capable de récupérer de l'énergie en décélération selon une loi de gestion répartissant en temps réel les apports d'énergie d'origine thermique et d'origine électrique.

Un groupe motopropulseur de véhicule automobile à propulsion ou à traction hybride comprend un moteur thermique et une ou plusieurs machines électriques, alimentées par au moins une batterie embarquée à bord du véhicule.

Les systèmes de commande des groupes motopropulseurs hybrides sont conçus pour gérer le fonctionnement et la synchronisation des différents moteurs en fonction de conditions de roulage, afin de limiter la consommation de carburant et de minimiser les émissions de particules polluantes. On parle de gestion des flux d'énergies thermique et électriques, pour désigner notamment la stratégie de pilotage mise en œuvre dans le système de commande en vue d'optimiser la répartition de puissance entre les flux d'énergie thermique et les flux d'énergie électrique. Le principe mis en œuvre pour choisir le meilleur point de fonctionnement consiste à minimiser la somme de la consommation thermique et de la consommation électrique selon une loi de gestion répartissant en temps réel les apports d'énergie d'origine thermique et d'origine électrique.

Les lois de gestion d'énergie de véhicule hybride ont naturellement tendance à utiliser l'énergie contenue dans la batterie notamment à vitesse élevée. Par ailleurs, les batteries sont capables de récupérer de l'énergie en décélération. Dans certaines descentes importantes et/ou prolongées, par exemple des descentes de col, il arrive cependant que le niveau d'énergie de la batterie dépasse le niveau d'énergie récupérable. En décélération et/ou en freinage, il n'est alors pas possible de récupérer dans la batterie toute l'énergie cinétique et potentielle du véhicule. En plus des considérations énergétiques, cette situation modifie le comportement du véhicule pendant la phase de décélération, et diminue son agrément de conduite. Le document EP 0 829 389 décrit un procédé tel que défini par le préambule de la revendication 1. Par la publication FR 2 926 048, on connaît une méthode de contrôle des accélérations d'un véhicule hybride, visant à améliorer son agrément de conduite en assurant au conducteur une forte accélération en toutes circonstances, par un apport d'énergie électrique prenant en compte non seulement l'état de charge de la batterie, mais également la quantité d'énergie électrique récupérable en décélération.

La méthode a donc le mérite de tirer profit de l'énergie électrique potentielle du freinage, pour améliorer le brio du véhicule en accélération. Toutefois, elle n'a aucun impact sur le comportement et la gestion énergétique du véhicule en situation réelle de freinage ou de décélération.

La présente invention vise à optimiser le potentiel de récupération d'énergie au freinage en en décélération d'un véhicule hybride, en favorisant la réduction de consommation de carburant, ainsi qu'un comportement homogène du véhicule pendant les phases de décélérations.

Dans ce but, elle propose que la loi de gestion de l'énergie dépende :

- d'un facteur d'équivalence fonction de l'état d'énergie instantané de la batterie, d'une cible d'énergie et des conditions de roulage du véhicule, et
- d'un facteur de décharge fonction du potentiel d'énergie récupérable en décélération.

De préférence, le facteur de décharge est pris en compte dans la loi de gestion de l'énergie, dès que le potentiel d'énergie récupérable en décélération est supérieur à la capacité d'absorption de la batterie.

Selon un mode de réalisation non limitatif de l'invention, le facteur d'équivalence est déterminé dans une boucle de régulation, apte à minimiser sur un point de fonctionnement du groupe motopropulseur, la consommation énergétique globale du véhicule.

D'autres caractéristiques et avantages de la présente invention ressortiront clairement à la lecture de la description suivante d'un mode de réalisation non limitatif de celle-ci, en se reportant au dessin annexé, dont la figure unique expose le principe.

La loi de gestion d'énergie d'un véhicule hybride répartit en temps réel la demande de couple issue du conducteur entre la(es) machine(s) électriques pour minimiser la consommation globale de carburant. Elle s'appuie sur la minimisation d'une fonction du type ci-dessous, pour pondérer par le facteur s, l'énergie d'origine électrique dans la loi de gestion de l'énergie :

```
H_eq = Conso_thermique + s  *  Conso_électrique,
```

où

- la consommation thermique est fonction du couple et du régime du moteur thermique
- la consommation électrique est fonction du couple et du régime de la machine électrique, et
- s est un facteur d'équivalence traduisant l'équivalence énergétique entre la puissance thermique et la puissance électrique,

Dans l'exemple non limitatif de boucle de calcul du facteur d'équivalence s illustrée par la figure, un premier comparateur C1 reçoit en valeurs d'entrée l'état d'énergie $soe_k$ de la batterie à l'instant k, et une valeur de cible d'état d'énergie $soe_{cible}$. La différence $(soe_{cible} - soe_k)$ est multipliée par un gain de correction $K_p$. Un deuxième comparateur C2 fait la somme du résultat $[K_p (soe_{cible} - soe_k)]$ et d'un terme de correction de type intégral qui assure une correction du facteur d'équivalence en fonction des conditions de roulage rencontrées. Cette somme est saturée par le saturateur S qui assure au facteur d'équivalence de rester entre les bornes maîtrisées. Les bornes de saturation minimum, $(sat_{min} - 1/\eta c)$ et maximum $(sat_{max} - 1/\eta c)$, assurent la maîtrise des modes de recharge et de décharge forcés.

La saturation maximum $sat_{max}$ est la valeur d'équivalence maximum assurant une commande au groupe motopropulseur qui recharge au maximum l'énergie de la batterie. La saturation $sat_{min}$ est la valeur d'équivalence minimum assurant une commande au groupe motopropulseur qui décharge au maximum la batterie. L'intégrateur I intègre la différence entre la sortie du saturateur S et sa propre intégration multipliée par un gain de correction $K_i$ à l'aide du comparateur C3. En intégrant cette différence, l'intégrateur ne pourra pas s'emballer lorsque le système est en saturation. Cette méthode est connue sous le nom anglais d' « anti-windup » ou d'anti-emballement, ou « désaturateur » en français. La sortie du saturateur est additionnée avec un terme 1/ $\eta c$ de type « feedforward » en anglais, ou terme de pré positionnement en français, à l'aide du comparateur C4. Ce terme « feedforward », ou de pré-positionnement, permet d'adapter directement le facteur d'équivalence en fonction d'une situation de roulage reconnue et/ou prédite.

Cette boucle comprend un intégrateur en boucle d'un terme représentatif de la différence entre l'état instantané de l'énergie de la batterie et l'état d'énergie cible de la batterie associé à un dispositif d'anti-emballement (« anti-windup »). Il comprend également un terme de compensation proportionnel.

La boucle dispose aussi d'un terme de pré-compensation (« feedforward »). Le facteur d'équivalence est piloté de manière discrète d'après l'équation suivante :

$$S_{k+1} = 1/\eta_c + Kp( soe_{cible} - soe_{k+1}) + Kp\, Ki( soe_{cible} - soe_k)$$

Dans cette équation, $soe_{cible}$ est l'état d'énergie cible que l'on souhaite atteindre, et $soe_k$ est l'état d'énergie de la batterie à l'instant k. $K_p$ et $K_I$ sont respectivement les gains de correction proportionnel et intégral ; $\eta c$ est le rendement moyen de conversion de l'énergie électrique en énergie thermique. Le rendement moyen de conversion $\eta c$ peut être ainsi calculé pour s'adapter en permanence aux circonstances, à partir de la connaissance à-priori de conditions de roulage prévisibles, ou à partir d'analyse des précédentes conditions de roulage. La correction intégrale apporte une correction a postériori, des hypothèses d'équivalence énergétique.

Si, par exemple, un type de roulage « en embouteillage » est identifié, il est possible de donner au rendement de conversion $\eta_c$ une valeur adaptée aux embouteillages, et d'obtenir un facteur d'équivalence sensiblement différent du facteur d'équivalence sur autoroute.

Enfin, lorsque l'équivalence est saturée, c'est-à-dire que le facteur d'équivalence s atteint des valeurs limite, imposant une recharge ou une décharge à tout prix de la batterie, le facteur d'équivalence s ne dépasse pas des limites (inférieure et supérieure) acceptables, car l' « antiwindup » évite tout emballement intempestif du terme intégral.

En sortie de cette boucle, le facteur d'équivalence s est corrigé dans le comparateur C4, par addition d'un terme de pré-positionnement ou « feedforward » en anglais qui force la décharge, lorsque le potentiel de récupération d'énergie p est supérieur à l'énergie totale que peut absorber la batterie E moins l'énergie moins le niveau d'énergie $soe_k$ mesuré dans la batterie à l'instant considéré.

Le potentiel d'énergie récupérable p est défini empiriquement de préférence en mesurant la quantité d'énergie récupérée dans la batterie suivant différentes décélérations sur différentes pentes jusqu'à l'arrêt. Il est également fonction d'une estimation de la vitesse V du véhicule, d'une estimation de la pente P de la route et d'une estimation de la masse m du véhicule. On peut établir des cartographies, qui donnent l'énergie récupérable p en fonction de la vitesse V et de la pente P de la route pour différentes masses m du véhicule.

Le potentiel d'énergie récupérable p est comparé dans le comparateur C5 à la différence E- $soe_k$, entre le niveau d'énergie maximum de la batterie et son état d'énergie instantané $soe_k$.

Dès que le potentiel d'énergie récupérable en décélération p est supérieur à la capacité d'absorption E - $soe_k$ de la batterie, le terme de pré-positionnement est mis à une valeur qui force la décharge qui est pris en compte dans la loi de gestion de l'énergie par addition au facteur d'équivalence s dans le comparateur C4 qui délivre le facteur d'équivalence final e$_{fin}$ déterminant la loi de gestion de l'énergie. Le facteur de décharge est annulé lorsque l'état de charge de la batterie *(soe$_k$)* est suffisamment faible par rapport au potentiel de récupération d'énergie (p).

En conclusion, l'introduction du facteur de pré-compensation de décharge dans la loi de gestion de l'énergie permet d'optimiser le potentiel de récupération d'énergie au freinage sur un véhicule hybride. Elle évite que l'énergie récupérée en décélération soit supérieure à la capacité d'absorption de la batterie, en utilisant davantage d'énergie électrique dans ces circonstances. L'invention garantit de ce fait une diminution de la consommation de carburant du véhicule, et minimise la dissipation d'énergie dans les freins mécaniques. Ces dispositions sont particulièrement avantageuses sur les véhicules équipés de transmissions sans variation de rapport, et/ou avec répartition de freinage entre les freins mécaniques et la machine électrique.

**Revendications**

1. Procédé de gestion de l'énergie en réponse à la demande de couple du conducteur sur un groupe motopropulseur de véhicule hybride comprenant un moteur thermique et au moins un moteur électrique alimenté par une batterie capable de récupérer de l'énergie en décélération selon une loi de gestion répartissant en temps réel les apports d'énergie d'origine thermique et d'origine électrique, **caractérisé en ce que** la loi de gestion de l'énergie dépend :

   - d'un facteur d'équivalence (s) fonction de l'état d'énergie instantané de la batterie *(soe$_k$),* d'une cible d'énergie *(soe$_{cible}$)* et des conditions de roulage du véhicule, déterminé dans une boucle de régulation apte à minimiser sur un point de fonctionnement du groupe motopropulseur la consommation énergétique globale du véhicule, et
   - d'un facteur de pré-compensation de décharge fonction du potentiel d'énergie récupérable en décélération (p).

2. Procédé selon la revendication 1, **caractérisé en ce que** le facteur pré-compensation de décharge est pris en compte dans la loi de gestion de l'énergie, dès que le potentiel d'énergie récupérable en décélération (p) est supérieur à la capacité d'absorption de la batterie.

3. Procédé de pilotage selon la revendication 1 ou 2, **caractérisé en ce que** le facteur de pré-compensation de décharge est additionné au facteur d'équivalence (s) dans un comparateur (C4) qui délivre un facteur d'équivalence final (e$_{fin}$).

4. Procédé de pilotage selon la revendication 3, **caractérisé en ce que** le facteur de pré-compensation de décharge est additionné au facteur d'équivalence (s) en sortie de sa boucle de régulation.

5. Procédé de pilotage selon l'une des revendications précédentes, **caractérisé en ce que** le potentiel d'énergie récupérable en décélération (p) est défini empiriquement en mesurant la quantité d'énergie récupérée dans la batterie sur des décélérations sur différentes pentes jusqu'à l'arrêt.

6. Procédé de pilotage selon la revendication 5, **caractérisée en ce que** le potentiel d'énergie récupérable en décélération (p) est défini en fonction d'une estimation de la pente de la route (P).

7. Procédé de pilotage selon la revendication 5 ou 6, **caractérisé en ce que** le potentiel d'énergie récupérable en décélération (p) est fonction de la masse (m) du véhicule.

8. Procédé de pilotage selon la revendication 5, 6 ou 7, **caractérisé en ce que** le potentiel d'énergie récupérable en décélération (p) est fonction de la vitesse(V) du véhicule.

9. Procédé de pilotage selon l'une des revendications précédentes, **caractérisé en ce que** le facteur de pré-compensation de décharge est annulé lorsque l'état de charge de la batterie *(soe$_k$)* est suffisamment faible par rapport au potentiel d'énergie récupérable en décélération (p).

**Patentansprüche**

1. Energiemanagementverfahren als Antwort auf die Drehmomentanforderung des Fahrers in einem Antriebsstrang eines Hybridfahrzeugs, umfassend einen Verbrennungsmotor und mindestens einen Elektromotor, der von einer Batterie gespeist wird, die fähig ist, Energie bei der Verlangsamung nach einem Managementgesetz wiederzugewinnen, das in Echtzeit die Energiezufuhr thermischen Ursprungs und elektrischen Ursprungs verteilt, **dadurch gekennzeichnet, dass** das Energiemanagementgesetz abhängt:

- von einem Äquivalenzfaktor (s), der vom momentanen Energiezustand der Batterie ($soe_k$), einem Energieziel ($soe_{cible}$) und Fahrbedingungen des Fahrzeugs abhängt, bestimmt in einer Regelschleife, die geeignet ist, an einem Funktionspunkt des Antriebsstrangs den Gesamtenergieverbrauch des Fahrzeugs zu minimieren, und
- von einem Entladevorausgleichsfaktor, der von dem bei Verlangsamung wiedergewinnbaren Energiepotential (p) abhängt.

2. Verfahren nach Anspruch 1, **dadurch gekennzeichnet, dass** der Entladevorausgleichsfaktor in dem Energiemanagementgesetz berücksichtigt wird, sobald das bei Verlangsamung wiedergewinnbare Energiepotential (p) größer als die Absorptionskapazität der Batterie ist.

3. Steuerungsverfahren nach Anspruch 1 oder 2, **dadurch gekennzeichnet, dass** der Entladevorausgleichsfaktor zu dem Äquivalenzfaktor (s) in einem Komparator (C4), der einen finalen Äquivalenzfaktor ($e_{fin}$) liefert, hinzugefügt wird.

4. Steuerungsverfahren nach Anspruch 3, **dadurch gekennzeichnet, dass** der Entladevorausgleichsfaktor zu dem Äquivalenzfaktor (s) am Ausgang seiner Regelschleife hinzugefügt wird.

5. Steuerungsverfahren nach einem der vorhergehenden Ansprüche, **dadurch gekennzeichnet, dass** das bei Verlangsamung wiedergewinnbare Energiepotential (p) empirisch definiert wird, wobei die in der Batterie bei Verlangsamungen bei verschiedenem Gefälle bis zum Stillstand wiedergewonnene Energiemenge gemessen wird.

6. Steuerungsverfahren nach Anspruch 5, **dadurch gekennzeichnet, dass** das bei Verlangsamung wiedergewinnbare Energiepotential (p) in Abhängigkeit von einer Schätzung des Gefälles der Straße (P) definiert wird.

7. Steuerungsverfahren nach Anspruch 5 oder 6, **dadurch gekennzeichnet, dass** das bei Verlangsamung wiedergewinnbare Energiepotential (p) von der Masse (m) des Fahrzeugs abhängt.

8. Steuerungsverfahren nach Anspruch 5, 6 oder 7, **dadurch gekennzeichnet, dass** das bei Verlangsamung wiedergewinnbare Energiepotential (p) von der Geschwindigkeit (V) des Fahrzeugs abhängt.

9. Steuerungsverfahren nach einem der vorhergehenden Ansprüche, **dadurch gekennzeichnet, dass** der Entladevorausgleichsfaktor aufgehoben wird, wenn der Ladezustand der Batterie ($soe_k$) im Vergleich mit dem bei Verlangsamung wiedergewinnbaren Energiepotential (p) niedrig genug ist.

**Claims**

1. Method for managing energy from a propulsion unit in response to the request for torque by the driver of a hybrid vehicle comprising an internal combustion engine and at least one electric motor powered by a battery, able to recover energy during deceleration, following a management law distributing in real time the energy supply from the internal combustion engine and from the electric motor, **characterized in that** the energy management law depends:

- on an equivalence factor (s) which is a function of the momentary energy state of the battery ($soe_k$), an energy target ($soe_{target}$) and the driving conditions of the vehicle determined in a regulation loop, able to minimize the global energy consumption of the vehicle at an operating point of the propulsion unit, and
- on a discharge feed-forward factor which is a function of the potential energy recoverable during deceleration (p).

2. Method according to Claim 1, **characterized in that** the discharge feed-forward factor is taken into account in the energy management law as soon as the potential energy recoverable during deceleration (p) exceeds the absorption capacity of the battery.

3. Control method according to Claim 1 or 2, **characterized in that** the discharge feed-forward factor is added to an equivalence factor (s) in a comparator (C4) which gives a final equivalence factor ($e_{fin}$).

4. Control method according to Claim 3, **characterized in that** the discharge feed-forward factor is added to the equivalence factor (s) at the output from the regulation loop.

5. Control method according to one of the preceding claims, **characterized in that** the potential energy recoverable during deceleration (p) is defined empirically by measuring the quantity of energy recovered in the battery during decelerations on different gradients until stoppage.

6. Control method according to Claim 5, **characterized in that** the potential energy recoverable during deceleration (p) is defined as a function of an estimation of the gradient of the road (P).

7. Control method according to Claim 5 or 6, **characterized in that** the potential energy recoverable during deceleration (p) is a function of the mass (m) of the vehicle.

8. Control method according to Claim 5, 6 or 7, **characterized in that** the potential energy recoverable during deceleration (p) is a function of the speed (V) of the vehicle.

9. Control method according to one of the preceding claims, **characterized in that** the discharge feed-forward factor is cancelled when the state of charge of the battery ($soe_k$) is sufficiently low in relation to the potential energy recoverable during deceleration (p).

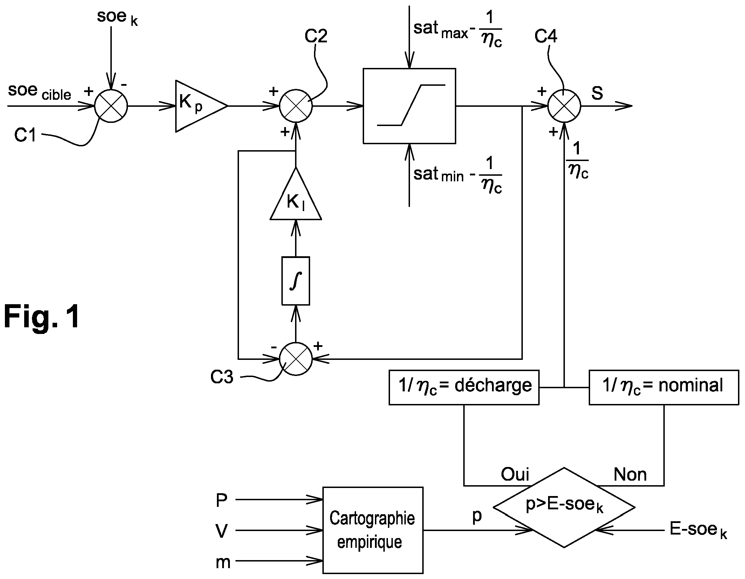

Fig. 1

**EP 2 867 087 B1**

## RÉFÉRENCES CITÉES DANS LA DESCRIPTION

**Documents brevets cités dans la description**

- EP 0829389 A
- FR 2926048